# EUROPEAN PATENT APPLICATION

(11) **EP 2 705 741 A1**
(43) Date of publication of application: **12.03.2014**
(21) Application number: 13183273.5
(22) Date of filing: 06.09.2013
(51) Int. Cl.: A01C 3/02, B01F 7/06

(54) **Device for neutralisation of manure**

(30) Priority: 06.09.2012 DK 201200550
(71) Applicant: Sørensen, Harry Højvang, 6818 Årre (DK)
(72) Inventor: Sørensen, Harry Højvang, 6818 Årre (DK)
(74) Representative: Kristensen, Martin Hjelm

(57) **Abstract**

The invention concerns a device (100) for neutralization of manure that is kept in a manure tank, where the device comprises:
a housing (2), where the housing comprises a flow channel (4), where the flow channel comprises an inlet (6) and an outlet (8), the flow channel thereby defining a flow process for liquids and/or slurries in a direction from the inlet to the outlet;
where the device comprises a propeller (10), the propeller being arranged in the flow channel between the inlet and the outlet;
where the device comprises means (12) of placing the propeller in rotating motion; where the device comprises a nozzle (14), the nozzle being arranged in the flow channel downstream from the propeller and upstream from the outlet;
where the device comprises two or more baffles (16), the baffles being arranged in the nozzle in an orientation that essentially corresponds to the flow process;
where the device furthermore comprises an acid adding inlet (18), this acid adding inlet being in fluidic connection with the flow channel.

## Description

### Field of the invention

The present invention in a first aspect deals with a device for neutralization of manure. In a second aspect, the present invention deals with an apparatus which comprises a device according to the first aspect of the invention. In a third aspect, the present invention deals with the use of a device or an apparatus according to the first or second aspect of the invention, respectively, for mixing or neutralization of manure. In a fourth aspect, the present invention deals with a method for mixing or neutralization of manure.

### Background of the invention

Within farming it is common and widespread to collect urine and feces from farm animals. This waste is most often mixed with a large quantity of hay or straw, which has been used as litter for the farm animals. This urine and feces - with or without hay or straw - is called manure. Manure contains valuable nutrients, chiefly in the form of nitrogen which is bound in the manure as ammonia, dissolved in water. Thanks to the high nutrient content of manure, it is a valuable nutrient source for farm crops and for this reason the manure is stored in large, often open tanks outdoors.

Because ammonia to most people has a strong, pungent and unpleasant odor, the spreading of manure represents an environmental nuisance to the surrounding environment and the surrounding residents, due to the evaporation of ammonia from the manure.

Thus, for example, in Denmark there has been legislated a requirement for the maximum ammonia evaporation from manure that is spread on fields. In order to meet this requirement and thereby abate the nuisance odors from the manure, farmers often choose to add acid, such as concentrated sulfuric acid, to the manure. When sulfuric acid is added to the manure, the ammonia in the manure enters into a chemical compound with sulfuric acid and forms ammonium sulfate, which is a salt that is easily soluble in water, and does not in itself cause odor nuisance, yet still retains the nutrient value for crops. By reducing the pH value to below 6, one accomplishes an effective reduction of the evaporation of ammonia and thereby also an effective odor reduction. The adding of acid is done while the manure is located in the manure tank.

Farmers also often choose to add other chemicals to the manure tank, such as other odor-reducing agents, antifoaming agents and liquid fertilizers.

Meanwhile, the adding of sulfuric acid to manure is not without its problems. Namely, the adding causes a vigorous production of foam, which in turn can lead to the manure tank overflowing so that some of the tank's contents end up outside the tank. This can easily happen, even when antifoaming agents are used at the same time.

Various steps have been taken to prevent foaming problems. It has been found that a very rapid diluting of a certain quantity of acid in a relatively large quantity of manure can substantially reduce the production of foam. For this reason, many of these steps involve making sure that the acid added is quickly stirred in the manure.

Thus, a device is described in PL 209 168 comprising a frame that carries an axle. On the other end of the axle is arranged a propeller. The axle is suspended in the frame so that it can rotate, and thus the axle can be oriented in various directions.

Although this device can help in the mixing of the manure when acid is being added, it has been found that the propeller in its rotation has a tendency to produce only a limited mixing in various directions from the propeller as opposed to a long-lasting and vigorous mixing in one particular direction. This means it is necessary to drive the propeller through large portions of the manure tank to achieve adequate mixing. Such a process is slow and time consuming.

DE 3321 143 A1 describes a device for mixing of manure. The device comprises a rod, which can be lowered into a manure tank. At the top of the rod is a motor, which is connected to an axle. The other end of the axle ends in a housing. The housing is designed to be lowered into the manure in a manure tank. The axle is connected inside the housing to an impeller, which upon rotation provides for a corresponding movement of the manure which is taken into the housing. The housing has several exit pipes, which can run along the bottom of the manure tank and end at various positions to ensure a more or less uniform distribution of the manure that is pumped out. Some of the pipes also have a branch for air supply.

Even though the device of DE 3321 143 A1 ensures that the mixed manure can be spread over a large region in the manure tank, this device has the drawback that the system is mounted entirely stationary and provides no opportunity for flexible directing of the mixture toward a specially chosen region.

DE 3309834 A1 describes a device for mixing of manure, comprising a motor, which is mounted on a pipe, in which there rotates an axle that is connected to the motor's axle. The other end of the axle terminates in a pump housing, to which is connected a discharge pipe. The pump housing comprises an inlet opening at the bottom. The discharge pipe has an inlet for air. When the motor axle rotates, manure is sucked in through the inlet opening of the housing. And the manure is ejected through the discharge pipe, where it is mixed with air.

Although this device enables a certain flexibility in the mixing of manure, since the device can be moved freely around in a horizontal plane through the manure tank, this device offers no opportunity of having the mixing occur by sucking in manure from the bottom and then ejecting it in an essentially vertical direction.

Thus, there is still an unsatisfied need for an improved device for mixing of manure in connection with its neutralization. In particular, there is still an unsatisfied need for an improved device for mixing of manure in connection with its neutralization that provides increased efficiency and flexibility in connection with the performance of the mixing/neutralization.

### Short description of the invention

These needs are satisfied according to the present invention in its first, second, third and fourth aspect.

Accordingly, the present invention in its first aspect indicates a device for neutralization of manure that is kept in a manure tank, where the device comprises:
a housing, where the housing comprises a flow channel,
where the flow channel comprises an inlet and an outlet, the flow channel thereby defining a flow process for liquids and/or slurries in a direction from the inlet to the outlet;
where the device comprises a propeller, the propeller being arranged in the flow channel between the inlet and the outlet;
where the device comprises means of placing the propeller in rotating motion;
where the device comprises a nozzle, the nozzle being arranged in the flow channel downstream from the propeller and upstream from the outlet;
where the device comprises two or more baffles, the baffles being arranged in the nozzle in an orientation that is essentially unidirectional in regard to the flow process;
where the device furthermore comprises an acid adding inlet, this acid adding inlet being in fluidic connection with the flow channel.

In a second aspect, the present invention comprises an apparatus for neutralization of manure, containing a device according to the first aspect of the invention and a crane for controlling the device, the crane having an arm on which the device is mounted.

In a third aspect, the present invention comprises a use of a device according to the first aspect of the invention or an apparatus according to the second aspect of the invention for mixing or neutralization of manure.

In a fourth aspect, the present invention comprises a method for mixing or neutralization of manure, comprising the following steps:
i) placement of a device according to the first aspect of the invention in a manure tank such that at least the inlet opening of the device is lowered into the manure;
ii) activating of the means for placing the propeller of the device in rotation so that the rotation of the propeller creates a suction effect in the flow channel upstream from the propeller and a pressure effect in the flow channel downstream from the propeller; thereby creating a movement of manure through the flow channel;
iii) orienting of the outlet in the desired direction for mixing of the manure;
iv) optional adding of acid via the acid adding inlet of the device during the mixing which is carried out in step iii).

With the device and this apparatus according to the first and second aspect of the invention one can achieve a very high degree of flexibility in the orienting and placing of the device in a manure tank.

Thus, the device and the apparatus according to the present invention ensure the achieving of a more effective mixing of manure, and furthermore the device brings about a more effective neutralization of manure by adding of acid or adding of other chemicals as compared to the known systems. This work step can be achieved in a shorter time and with less energy consumption with the device and the apparatus according to the invention, as compared to the known systems.

This can likewise occur with the device and the apparatus according to the present invention with greatly reduced formation of foam.

In fact, it has been found that a reduced foam formation can be achieved during an adding of acid or an adding of other chemicals by beginning with a suctioning of manure up from the bottom and directing this sediment manure up to the surface and subsequently mixing this manure in the surface.

### Short description of figures

Fig. 1 shows in perspective view a device according to the present invention.
Fig. 2 shows the device of Fig. 1 seen from the outlet end.
Fig. 3 shows a longitudinal cross section of the device of Fig. 2.
Fig. 4 shows in perspective view an apparatus according to the present invention.
Fig. 5 shows an alternative device shown from the outlet end.
Fig. 6 shows a sketch of the device of Fig. 5 seen as a partial longitudinal cross section.
Fig. 7 shows in perspective view the device of Fig. 5.

### Detailed description of the invention

### The first aspect according to the present invention

The present invention in a first aspect indicates a device for neutralization of manure that is kept in a manure tank, where the device comprises:
a housing, where the housing comprises a flow channel,
where the flow channel comprises an inlet and an outlet, the flow channel thereby defining a flow process for liquids and/or slurries in a direction from the inlet to the outlet;
where the device comprises a propeller, the propeller being arranged in the flow channel between the inlet and the outlet;
where the device comprises means of placing the propeller in rotating motion;
where the device comprises a nozzle, the nozzle being arranged in the flow channel downstream from the propeller and upstream from the outlet;
where the device comprises two or more baffles, the baffles being arranged in the nozzle in an orientation that essentially corresponds to the flow process;
where the device furthermore comprises an acid adding inlet, this acid adding inlet being in fluidic connection with the flow channel.

The device according to the first aspect of the present invention can be used for mixing or finely dividing or homogenization of manure in a manure tank, or it can be used for neutralization of manure by adding acid or other chemicals.

In the present specification and in the enclosed claims the term *"neutralization of manure"* shall be understood to mean the treatment to lower the pH value of the manure from a value of over 7 to a value of around 7 or below 7, preferably below 6, by adding of acid, whereby the ammonia in the manure is bound in the ionic form so that it is hard to be evaporated as ammonia.

The device according to the first aspect of the present invention thus comprises a housing, which in turn comprises a flow channel. The flow channel contains a propeller, which can suction manure in from an inlet into the flow channel and force this manure through the flow channel to an outlet. In this way, a mixing or fine dividing of the manure can occur, since the mechanical action of the propeller can break larger clumps into pieces. The propeller is driven by suitable means that are appropriate to this purpose. Before the manure is discharged from the device, it goes through a nozzle.

When the manure is suctioned through the propeller, the manure will be affected by the rotation of the propeller and besides the manure receiving energy which is converted into a transverse movement longitudinally through the flow channel, the rotation of the propeller will also cause the manure to have a velocity component corresponding to a rotational movement. This rotational movement of the manure is undesirable, since the mode of operation of the device is in fact for the pumping via the propeller to produce a very powerful jet of manure that can be led in a particular direction without much spreading. To cancel the rotational movement of the manure due to the propeller, inside the flow channel there are arranged two or more baffles in the nozzle of the device, which ensure a braking of the rotational movement and thereby streamline the movement of the manure in an essentially rectilinear movement. Within the nozzle there are two or more baffles, which provide for rectifying the movement of the manure resulting from mechanical action from the propeller. The baffles inside the nozzle are arranged in an orientation that essentially corresponds to the flow process.

By the term *"in an orientation that essentially corresponds to the flow process"* or *"in an orientation that is essentially unidirectional with the flow process"* shall be understood in the present specification and in the enclosed claims that the baffles are oriented such within the nozzle of the flow channel that they exert minimal friction against the flowing manure and the baffles essentially follow the movement of the manure along the nozzle. Thus, the baffles are not oriented transversely in the nozzle.

The flow channel is moreover in fluidic connection with an acid adding inlet. The acid adding inlet allows one to add acid at the same time that the manure is being led through the flow channel of the device. This can ensure that one gets a vigorous and effective mixing of the manure when acid is added and at the same time the acid is mixed in with the manure for its neutralization. The acid adding inlet can furthermore be used for adding of chemicals other than acid, such as other odor-reducing agents, foam suppressing agents, and liquid fertilizers.

In one embodiment of the device according to the first aspect of the present invention the device can comprise more than one inlet corresponding to an acid adding inlet. Thus, the device can comprise 2, 3 or for example 4 or more inlets corresponding to an acid adding inlet.

In this way, one can accomplish the adding of several chemicals for the mixing in the device at the same time. These other chemicals can be, for example, other odor-reducing agents, foam suppressing agents, and liquid fertilizers.

In one special embodiment of the device according to the first aspect of the present invention one or more of the inlets can be configured as a continuous branch having its inlet outside of the flow channel and its outlet inside the flow channel, the branch having an extension inside the flow channel.

This embodiment can ensure a better mixing of the chemicals added through the branch.

In one embodiment of the device according to the first aspect of the present invention, the acid adding inlet/inlets are arranged upstream from the propeller.

In one embodiment of the device according to the first aspect of the present invention the acid adding inlet/inlets are arranged downstream from the propeller.

In one embodiment of the device according to the first aspect of the present invention the acid adding inlet/inlets are arranged at the propeller.

The acid adding inlet or inlets can in theory be arranged anywhere in relation to the flow channel. But it is preferable to arrange the acid adding inlet/inlets downstream from the propeller, so that the acid added will not have negative corrosion effects on the portion of the flow channel situated upstream from the acid adding inlet.

By the term *"downstream"* and *"upstream"* shall be understood in the present specification and the enclosed claims a position seen in relation to the direction of liquid flow in the flow channel, when the device is in operation, so that the device defines in this way a flow direction from the inlet to the outlet.

In one embodiment of the device according to the first aspect of the present invention the means for placing the propeller in rotational movement is an electric motor or a hydraulic motor.

These types of motors have proven to be especially suited to the intended use.

It is preferable for the means of placing the propeller in rotational movement to have a power of 50 - 225 kW, such as 75 - 200 kW, for example 100 - 175 kW, such as 125 - 150 kW.

Such power ensures vigorous and effective mixing of the manure in a manure tank.

In one embodiment of the device according to the first aspect of the present invention the nozzle is configured as a conical channel, and where one or several of the baffles are at least partially arranged in an axial direction in relation to this conical channel.

When the nozzle is configured as a conical channel, the cross section area at a given position in the nozzle will be less than the cross section area in a position upstream from this. This will produce an increase in the velocity of the manure as it moves through the nozzle. This increased velocity can be converted into an improved mixing of the manure, since the jet of manure emerging from the outlet is more powerful.

By the term *"are at least partially arranged in an axial direction in relation to this conical channel"* shall be understood in the present specification and the enclosed claims that the baffles in a downstream end are arranged in an axial direction in relation to the conical channel, but the baffles in an upstream end can be curved, as explained below.

In one embodiment of the device according to the first aspect of the present invention the angle of one or more of the acid adding inlets in relation to the direction of the flow process at the site of the acid inlet is 5 - 90°, such as 10 - 85°, for example 15 - 80°, such as 20 - 75°, for example 25 - 70°, such as 30 - 65°, such as 35 - 60°, for example 40 - 55°, such as 45 - 50°.

This angling of the acid adding inlet/inlets ensures that the acid or other chemicals are not added to the flow channel in a direction against the direction of flow of the manure.

In one embodiment of the device according to the first aspect of the present invention the number of baffles is 3 - 14, such as 4 - 13, for example 5 - 12, such as 6 - 11, for example 7 - 10, such as 8-9.

Such a number ensures an effective rectifying of the manure flow, in that the rotational movement of the manure is reduced or totally eliminated in this way.

In one embodiment of the device according to the first aspect of the present invention the baffles in the flow channel at the end facing the propeller are curved in a direction corresponding to the direction taken by a liquid driven by the propeller; and the baffles at the end facing the outlet are unidirectional with the axial direction of the nozzle.

Such a configuration of the baffles will ensure minimal friction within the flow channel in the device, and this configuration will thus ensure an increased effectiveness.

In one embodiment of the device according to the first aspect of the present invention the baffles are configured such that the baffles at the end facing the propeller are tapered.

Such a configuration of the baffles ensures that straw and other solid residues do not plug up the flow channel in the device.

In one embodiment of the device according to the first aspect of the present invention the housing, baffles, and the flow channel are independently made of steel, such as stainless steel, for example acid-resistant stainless steel. These materials have proven to be suitable for the purpose. But it is preferable for the parts arranged downstream of the acid adding inlet/inlets to be made of acid-resistant, stainless steel.

In one embodiment of the device according to the first aspect of the present invention the cross section area of the inlet is 1000 - 5000 cm2, such as 1250 - 4500 cm2, for example 1500 - 4250 cm2, such as 1750 - 4000 cm2, for example 2000 - 3750 cm2, for example 2250 - 3500 cm2, such as 2500 - 3250 cm2, such as 2750 - 3000 cm2.

In one embodiment of the device according to the first aspect of the present invention the cross section area of the outlet is 400 - 2200 cm2, such as 600 - 2000 cm2, for example 800 - 1800 cm2, such as 1000 - 1600 cm2, for example 1200 - 1400 cm2.

In one embodiment of the device according to the first aspect of the present invention the propeller diameter is 200 - 900 mm, such as 300 - 800 mm, for example 400 - 700 mm, such as 500 - 600 mm.

The above indicated dimensions ensure a free path through the flow channel of the device, so that even large clumps can be suctioned in through the flow channel of the device without clogging it. At the same time, these dimensions ensure a sufficiently large volume flow of manure, which in turn ensures a fast and effective mixing/neutralization of the manure.

In one embodiment of the device according to the first aspect of the present invention the blades of the propeller are configured such that each one has in particular a front edge having a backward pointing curvature.

Such a configuration of the propeller blades ensures that any straw residues are flung off, so that there is no clogging of the device.

In one embodiment of the device according to the first aspect of the present invention the outlet opening of the outlet is angled in relation to the inlet direction of the inlet.

It is preferable for this angle to be 30 - 120°, such as 40 - 110°, for example 50 - 100°, such as 60-90° or 70 - 80°.

Such an angling of the outlet direction of the outlet in relation to the inlet direction of the inlet means that one can easily make the sediment of the manure tank be suctioned up in the device when adding the acid or when adding other chemicals via the device and be discharged in the direction of the manure surface of the manure tank. Such a method of adding acid or other chemicals has proven to reduce the formation of foam.

### The second aspect according to the present invention

In a second aspect, the present invention indicates an apparatus for neutralization of manure, containing a device according to the first aspect and a crane for controlling the device, the crane having an arm on which the device is mounted.

In this aspect, the crane functions to direct the device according to the first aspect to where one wants the mixing or the adding of acid or the adding of other chemicals to occur.

In one embodiment of the apparatus according to the second aspect of the present invention the apparatus comprises two or more sub-arms that are mounted so that they can rotate and or move transversely relative to each other.

In one embodiment of the apparatus according to the second aspect of the present invention the apparatus comprises means for its servo-control, for example, via a hydraulic system.

These embodiments ensure easy and secure control of the device in the manure tank, while at the same time achieving great flexibility, since even the remote parts of the manure tank can be reached via the crane.

In one embodiment of the apparatus according to the second aspect of the present invention the apparatus furthermore comprises one or more hoses for supply of acid and/or other chemicals, and where the hose(s) is coupled to one of the acid adding inlets of the device.

In one embodiment of the apparatus according to the second aspect of the present invention the apparatus further comprises one or more pumps for pumping of acid and/or other chemicals through the hose to the one or more acid adding inlets of the device.

These embodiments ensure the correct quantity of adding of acid or other chemicals to the device of the apparatus that is submerged in the manure tank.

It is clear that such an apparatus during its operation comprises means of supplying energy to the means for placing the propeller in rotational movement. Such means for supply of energy can comprise, for example, hydraulic hoses or electrical cables.

### The third aspect according to the present invention

In a third aspect, the present invention indicates a use of a device according to the first aspect of the invention or an apparatus according to the second aspect of the invention for mixing or neutralization of manure.

### The fourth aspect according to the present invention

In a fourth aspect, the present invention indicates a method for mixing or neutralization of manure, comprising the following steps:
i) placement of a device according to the first aspect of the invention in a manure tank such that at least the inlet opening of the device is lowered into the manure;
ii) activating of the means for placing the propeller of the device in rotation so that the rotation of the propeller creates a suction effect in the flow channel upstream from the propeller and a pressure effect in the flow channel downstream from the propeller; thereby creating a movement of manure through the flow channel;
iii) orienting of the outlet in the desired direction for mixing of the manure;
iv) optional adding of acid via the acid adding inlet of the device during the mixing which is carried out in step iii).

In one embodiment of the method according to the fourth aspect of the present invention, the method comprises:
a) in a first partial process, making the device suction manure from the lower part of the manure tank and discharge this suctioned manure via the outlet of the device in a direction toward the manure surface; and then
b) making the device suction manure from the surface of the manure tank and discharge this suctioned manure via the outlet of the device in the manure surface in the manure tank.

Such a method for adding acid to the acid adding inlet of the device will ensure a reduced formation of foam, which means a more effective and time-saving adding of acid.

It is believed that this reduced foam formation is the result of the heavier, solid portions of the manure, typically located at the bottom of the tank, being mixed with acid before the liquid portion that is mixed with acid.

The invention is explained hereafter with regard to the enclosed figures. It should be noted that the enclosed figures merely illustrate non limiting embodiments, and a number of other embodiments will be possible within the scope of the present invention.

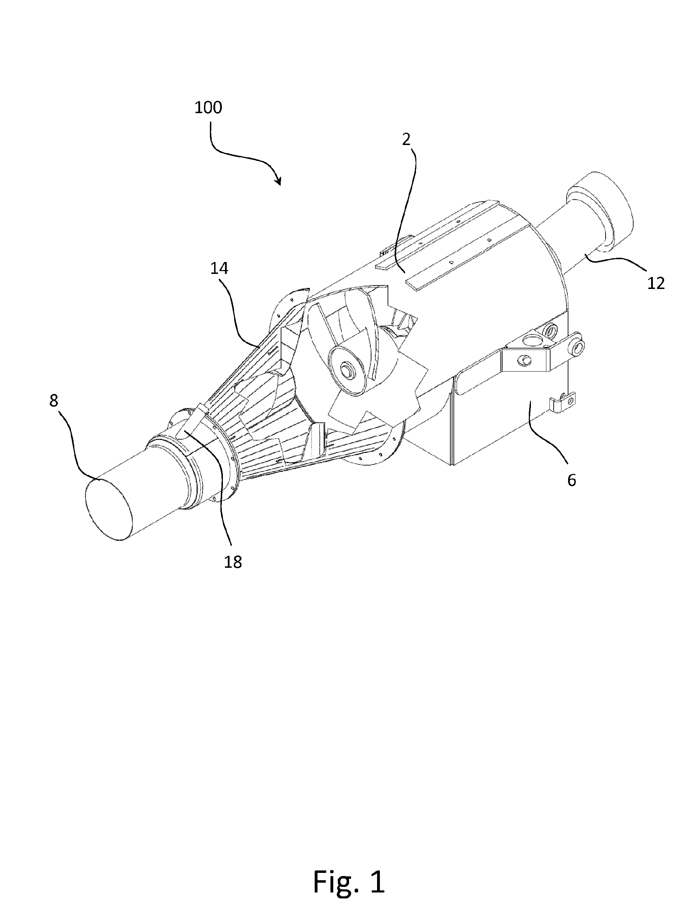

Fig. 1 shows in perspective view a device 100 for neutralization of manure that is kept in a manure tank according to the first aspect of the invention. The device comprises a housing 2, which in turn comprises an inlet 6 and an outlet 8. Between the inlet 6 and the outlet 8 there is a flow channel (not shown).

Fig. 1 also shows means 12 for placing in rotation a propeller that is located inside the flow channel. Furthermore, Fig. 1 shows that the flow channel emerges into a conical nozzle 14, which terminates in the outlet 8. Finally, Fig. 1 shows the acid adding inlet 18, which is arranged close to the outlet 8.

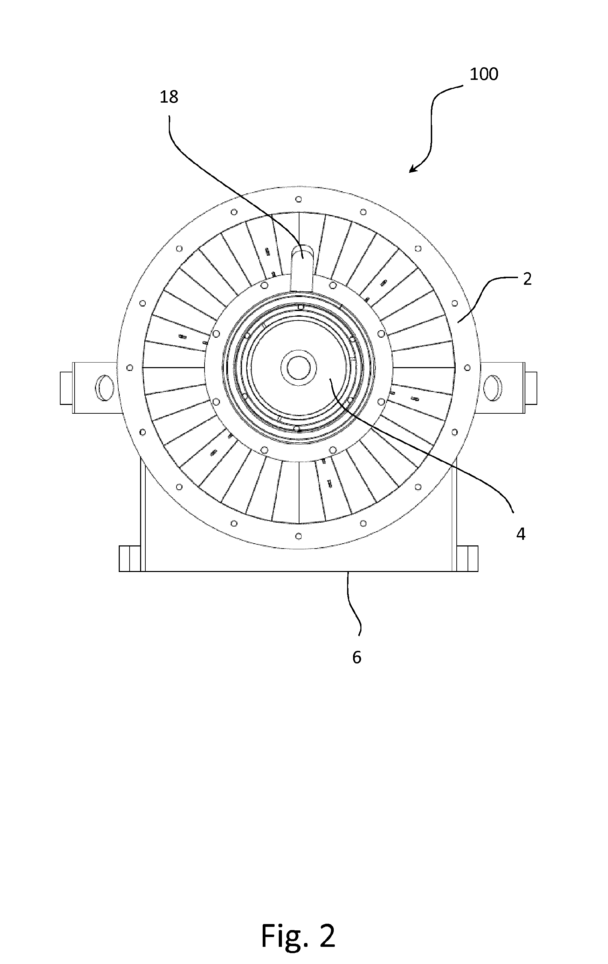

Fig. 2 shows the device 100 of Fig. 1 seen from the outlet end. Fig. 2 thus shows the housing 2 and the flow channel 4 of the device. Furthermore, the inlet 6 and the acid adding inlet 18 are shown in Fig. 2.

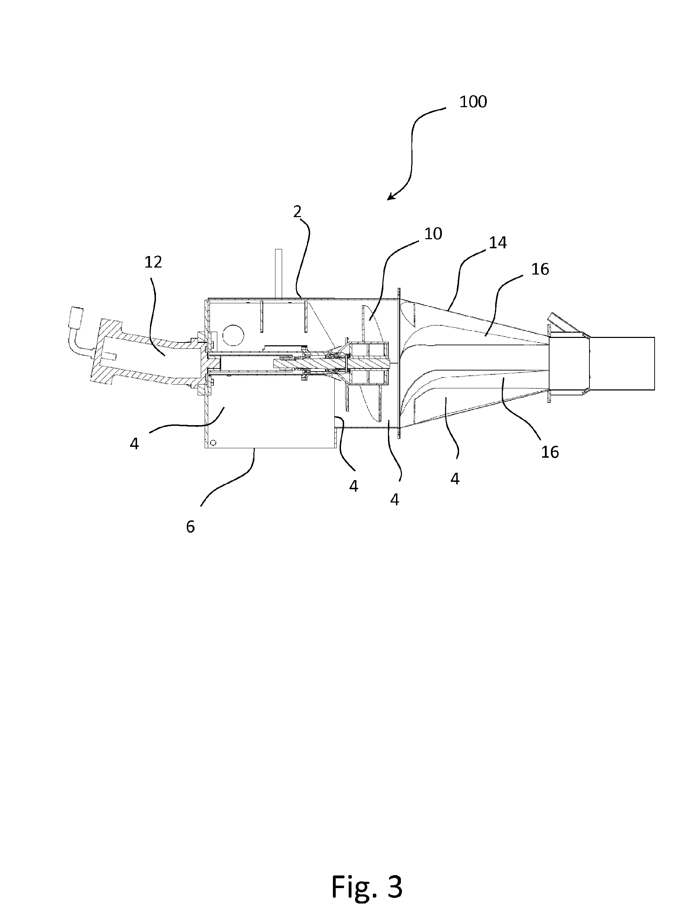

Fig. 3 shows the device 100 of Fig. 2 in cross section. One sees the housing 2 in Fig. 3. The housing comprises a flow channel 4, which begins at the inlet 6, and which ends at the outlet 8. In the flow channel is located a propeller 10, which can rotate via the supply of power from a hydraulic motor 12. Downstream from the propeller is shown the nozzle 14, which comprises a conical channel. In the nozzle 14 there are a series of baffles 16, serving to rectify the flow of manure inside the nozzle, i.e., to reduce or eliminate the rotational movement which the manure has obtained thanks to the mechanical action of the propeller with rotational energy.

The baffles in the end facing the propeller are curved such that each baffle in this end defines a direction that is essentially parallel to the direction of flow of the manure when it leaves the propeller. At the opposite end of the baffles, the direction of these plates is oriented such that they are unidirectional with the axial direction of the nozzle.

Downstream from the nozzle 14 is the outlet 8, and immediately upstream from this is arranged an acid adding inlet 18 on the nozzle, which is angled in relation to the direction of flow of the manure, such that the acid is not sprayed in a direction that is contrary to the flow direction of the manure.

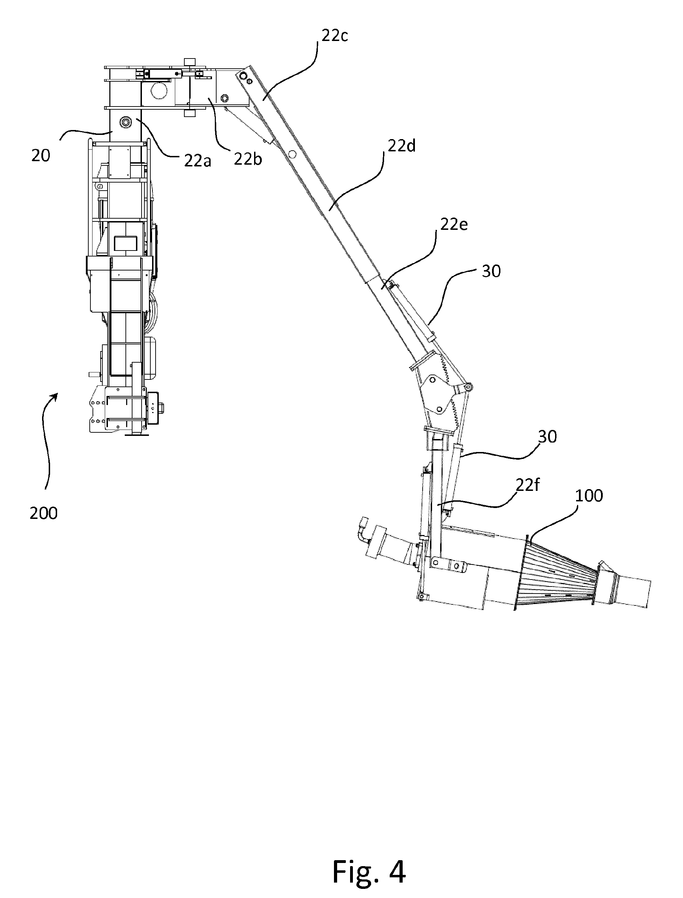

Fig. 4 shows an apparatus 200 according to the second aspect of the invention. The apparatus comprises a crane 200 and a device 100 according to the first aspect of the invention. The device 100 is suspended at one end of the crane and the other end of the crane is mounted in a foundation on the ground. The crane 200 comprises a series of sub-arms 22a, 22b, 22c, 22d, 22e, 22f, which are either mutually rotational or transversely displaceable in relation to each other. This means that the crane on the one hand can reach far away from its foundation, for example, right over to the furthest portion of the manure tank, and on the other hand the device 100 can be oriented in many different directions, so that the manure discharged from the device 100 can be directed for the most part in every direction. In particular, it is possible for the apparatus 200 shown in Fig. 4 to suction manure from the lower portion of a manure tank and discharge this manure in an essentially vertical direction. Such an orientation has proven to be able to reduce the foam production substantially, making possible a faster and more effective neutralization of the manure.

The crane can be controlled with the aid of means 30 for its servo-control. Such means can comprise, e.g., a hydraulic system, such as one comprising hydraulic cylinders 30.

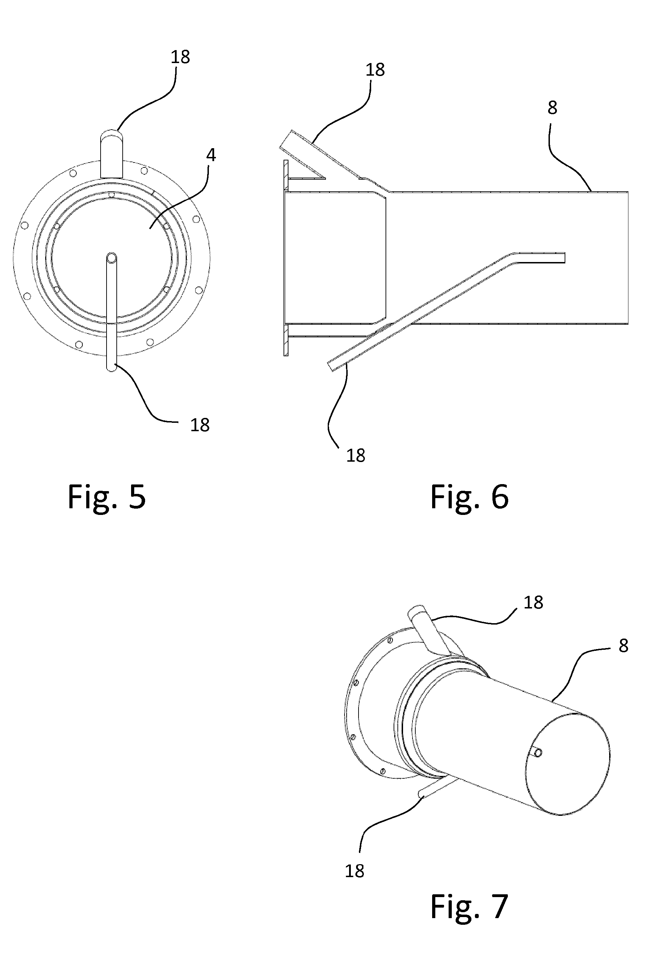

Figures 5, 6 and 7 show an alternative embodiment of the device according to the fourth aspect of the present invention. In this embodiment, one of the inlets 18 is configured as a continuous branch, having its inlet outside the flow channel 4, and having its outlet inside the flow channel 4, and the branch has a certain extension inside the flow channel.

### Figure references

- 2: - Housing of the device
- 4: - Flow channel in the device
- 6: - Inlet of flow channel
- 8: - Outlet of flow channel
- 10: - Propeller
- 12: - Means of placing propeller in rotation
- 14: - Nozzle
- 16: - Baffle
- 18: - Acid adding inlet
- 20: - Crane
- 22: - Crane arm
- 22a: - Sub-arm of crane
- 22b: - Sub-arm of crane
- 22c: - Sub-arm of crane
- 22d: - Sub-arm of crane
- 22e: - Sub-arm of crane
- 22f: - Sub-arm of crane
- 30: - Means for servo control of crane arm
- 100: - Device according to the invention
- 200: - Apparatus according to the invention

## Claims

1. Device (100) for neutralization of manure that is kept in a manure tank, where the device comprises:
a housing (2), where the housing comprises a flow channel (4),
where the flow channel comprises an inlet (6) and an outlet (8), the flow channel thereby defining a flow process for liquids and/or slurries in a direction from the inlet to the outlet;
where the device comprises a propeller (10), the propeller being arranged in the flow channel between the inlet and the outlet;
where the device comprises means (12) of placing the propeller in rotating motion;
where the device comprises a nozzle (14), the nozzle being arranged in the flow channel downstream from the propeller and upstream from the outlet;
where the device comprises two or more baffles (16), the baffles being arranged in the nozzle in an orientation that essentially corresponds to the flow process;
where the device furthermore comprises an acid adding inlet (18), this acid adding inlet being in fluidic connection with the flow channel.

2. Device according to claim 1, where the device comprises more than one acid adding inlet, such as 2, 3, 4 or more acid adding inlets, the device thereby making possible a simultaneous mixing with more than one chemical.

3. Device according to claim 1 or 2, where the acid adding inlet/inlets are arranged upstream from the propeller.

4. Device according to claim 1 or 2, where the acid adding inlet/inlets are arranged downstream from the propeller.

5. Device according to claim 1, 2 or 3, where the acid adding inlet/inlets are arranged at the propeller.

6. Device according to any one of claims 1 to 5, where the nozzle is configured as a conical channel, and where the one or more baffles are at least partly arranged in an axial direction in relation to this conical channel.

7. Device according to any one of claims 1 to 6, where the housing (2), baffles (16) and the flow channel (4) are independently made of steel, such as stainless steel, for example, acid-resistant stainless steel.

8. Device according to any one of claims 1 to 7, where the outlet direction of the outlet (8) is angled in relation to the inlet direction of the inlet (6), e.g., such that the angle is 30 - 120°, such as 40-110°, for example 50 - 100°, such as 60 - 90° or 70 - 80°.

9. Device according to any one of claims 1 to 8, where the baffles (16) in the flow channel at the end facing the propeller are curved in a direction corresponding to the direction taken by a liquid driven by the propeller; and where the baffles at the end facing the outlet are unidirectional with the axial direction of the nozzle.

10. Apparatus (200) for neutralization of manure, containing a device (100) according to any one of claims 1 to 9, and a crane (20) for controlling the device, the crane having an arm (22) on which the device is mounted.

11. Apparatus according to claim 10, where the crane has two or more sub-arms (22a, 22b, 22c, 22d, 22e, 22f) which are able to rotate and/or move transversely relative to each other.

12. Apparatus according to any one of claims 10 to 11, where the apparatus furthermore comprises one or more hoses for supply of acid and/or other chemicals, and where the hose is coupled to one of the acid adding inlets of the device; and where the apparatus can further comprise one or more pumps for pumping of acid and/or other chemicals through the hose to the one or more acid adding inlets of the device.

13. Use of a device (100) according to any one of claims 1 to 9 or an apparatus (200) according to claims 10 to 12 for mixing or neutralization of manure.

14. Method for mixing or neutralization of manure, comprising the following steps:
i) placement of a device (100) according to any one of claims 1 to 9 in a manure tank such that at least the inlet opening of the inlet (6) of the device is lowered into the manure;
ii) activating of the means for placing the propeller (10) in rotation so that the rotation of the propeller creates a suction effect in the flow channel (4) upstream from the propeller and a pressure effect in the flow channel downstream from the propeller; thereby creating a movement of manure through the flow channel;
iii) orienting of the outlet (8) in the desired direction for mixing of the manure;
iv) optional adding of acid and/or other chemicals via one or more the acid adding inlets (18) of the device during the mixing which is carried out in step iii).

15. Method according to claim 14 where the method comprises
a) in a first partial process, making the device (100) suction manure from the lower part of the manure tank and discharge this suctioned manure via the outlet (8) of the device in a direction toward the manure surface; and then
b) making the device suction manure from the surface of the manure tank and discharge this suctioned manure via the outlet (8) of the device in the manure surface in the manure tank.
